# FASCICULE DE BREVET EUROPEEN

(11) **EP 1 312 762 B1**
(45) Date de publication et mention de la délivrance du brevet: **27.04.2005**
(21) Numéro de dépôt: 02292826.1
(22) Date de dépôt: 14.11.2002
(51) Int. Cl.: F01D 11/12, F01D 21/04, F01D 5/20, F04D 29/32

(54) **Aube de soufflante a sommet fragilise**
Gebläseschaufel mit zerbrechlicher Spitze
Fan blade having a brittle tip

(30) Priorité: 14.11.2001 FR 0114690
(43) Date de publication de la demande: 21.05.2003
(73) Titulaire: SNECMA MOTEURS, 75015 Paris (FR)
(72) Inventeur: Gerez, Valério, 91330 Yerres (FR); Jadczak, Edouard, 77350 Le Mee Sur Seine (FR)

(56) Documents cités:
- EP-A- 1 013 889
- US-A- 1 828 409
- US-A- 3 096 930
- US-A- 5 417 501
- US-A- 5 974 782

## Description

L'invention concerne un turbomoteur pour aéronef susceptible d'être maintenu en fonctionnement dégradé après apparition d'un balourd accidentel sur un rotor provoqué par exemple par une rupture d'aube de soufflante sous l'impact d'un corps étranger.

Elle concerne plus précisément un turboréacteur pour aéronef comportant une soufflante dont le moyeu est entraîné par un arbre porté par au moins un palier relié à la structure du turboréacteur par un support de palier avec interposition d'un dispositif de découplage, ledit moyeu comportant à sa périphérie une pluralité d'aubes se déplaçant à l'intérieur d'un carter de rétention avec un jeu radial E entre les sommets desdites aubes et la paroi intérieure dudit carter de rétention, ladite paroi intérieure étant revêtue d'une couche de matériau abradable susceptible d'être rabotée par les sommets des aubes en rotation.

L'état de la technique est illustré par FR 2 749 883. Dans ce document, le dispositif de découplage est constitué par des liaison frangibles, et le jeu radial E entre les sommets des aubes et la paroi intérieure du carter est défini suffisamment grand pour que le rotor soit toujours guidé en rotation par le palier après rupture des éléments frangibles et n'arrive pas au contact du carter, ceci au moins pour les vitesses de rotation normales du turbomoteur dans son domaine de vol et un degré de dommage préétabli, afin d'éviter que les sommets des aubes ne frottent contre le carter de rétention, ce qui créerait des risques d'incendie et déplacerait le mode propre du rotor vers les vitesses de rotation élevées.

Du fait que l'épaisseur de l'abradable est relativement élevée, et que la face interne de l'abradable est dans le prolongement des sections d'entrée et de sortie d'air de la soufflante pour des raisons aérodynamiques, la géométrie du carter de rétention est relativement complexe, ce qui entraîne des coûts de fabrication et une augmentation de masse et d'encombrement.

Le but de l'invention est de proposer un turboréacteur tel que défini en introduction dans lequel le jeu nécessaire au fonctionnement du découpleur est supérieur à l'épaisseur de la couche de matériau abradable.

L'invention atteint son but par le fait que les sommets des aubes sont susceptibles d'être désintégrés par la paroi interne du carter de rétention en cas de choc suite à l'apparition d'un balourd ayant entraîné le découplage du palier, afin d'obtenir un jeu J > E nécessaire au fonctionnement du découpleur.

Avantageusement, les aubes présentent près de leur sommet une zone fragilisée suffisamment résistante pour que les sommets desdites aubes puissent faire leur chemin dans le matériau abradable du carter de rétention, et suffisamment fragile pour casser à l'apparition d'un contact violent entre les sommets desdites aubes et la paroi interne du carter de rétention.

Ainsi, le jeu nécessaire au fonctionnement du découpleur se fait non plus seulement par désintégration de l'abradable du carter de rétention, mais aussi et surtout par désintégration du sommet d'au moins quelques aubes de la soufflante.

L'épaisseur de l'abradable peut ainsi être fortement réduite, ce qui simplifie la géométrie du carter de rétention, en réduisant la masse et les coûts de fabrication.

Il est également à noter que la désintégration des sommets se produit principalement sur les aubes disposées dans la région opposée à l'aube abîmée, cause du balourd. Il en résulte que le balourd diminue à la suite de la désintégration de ces sommets d'aubes.

Avantageusement, la zone fragilisée est réalisée par une rainure ménagée parallèlement au sommet sur une face de chaque aube dans le matériau de base constitutif de ladite aube, la cavité de ladite rainure étant remplie d'une résine afin d'assurer la continuité aérodynamique de ladite face.

La présence de cette rainure remplie de résine permet en outre de diminuer le poids de l'aube en cas de rupture.

La profondeur de la rainure est calculée de telle manière que la paroi restante soit mince et suffisamment résistante pour permettre le rabotage du matériau abradable, tout en étant suffisamment fragile pour rompre en cas de choc du sommet d'aube contre la paroi interne du carter de rétention.

La rainure est ménagée de préférence dans la face extrados de l'aube.

De préférence, la paroi interne du carter de rétention présente des nervures sensiblement axiales formant une râpe afin de faciliter la désintégration des sommets des aubes en cas de balourd accidentel après abrasion du matériau abradable par les sommets d'aubes. Cette râpe présente en outre l'avantage de mieux retenir l'abradable.

D'autres avantages et caractéristiques de l'invention ressortiront à la lecture de la description suivante faite à titre d'exemple et en référence aux dessins annexés dans lesquels :
- la figure 1 est une demi-coupe axiale d'un sommet d'aube de soufflante au voisinage du carter de rétention dans un turboréacteur sans découpleur, selon l'art antérieur ;
- la figure 2 est une demi-coupe axiale d'un sommet d'aube de soufflante au voisinage du carter de rétention dans un turboréacteur avec découpleur, selon l'art antérieur ;
- la figure 3 montre l'extrémité d'une aube de soufflante et la partie avoisinante du carter de rétention dans un turboréacteur selon l'invention ;
- la figure 4 est une vue en coupe selon la ligne IV-IV de la figure 3 ; .
- la figure 5 est une coupe latérale, côté extrados de l'extrémité de l'aube selon l'invention, prise selon la ligne V-V de la figure 7 ;
- la figure 6 est une coupe axiale selon la ligne VI-VI de la figure 5 ; et
- la figure 7 est une coupe circonférentielle de la zone fragilisée de l'extrémité d'aube, coupe prise selon la ligne VII-VII de la figure 5.

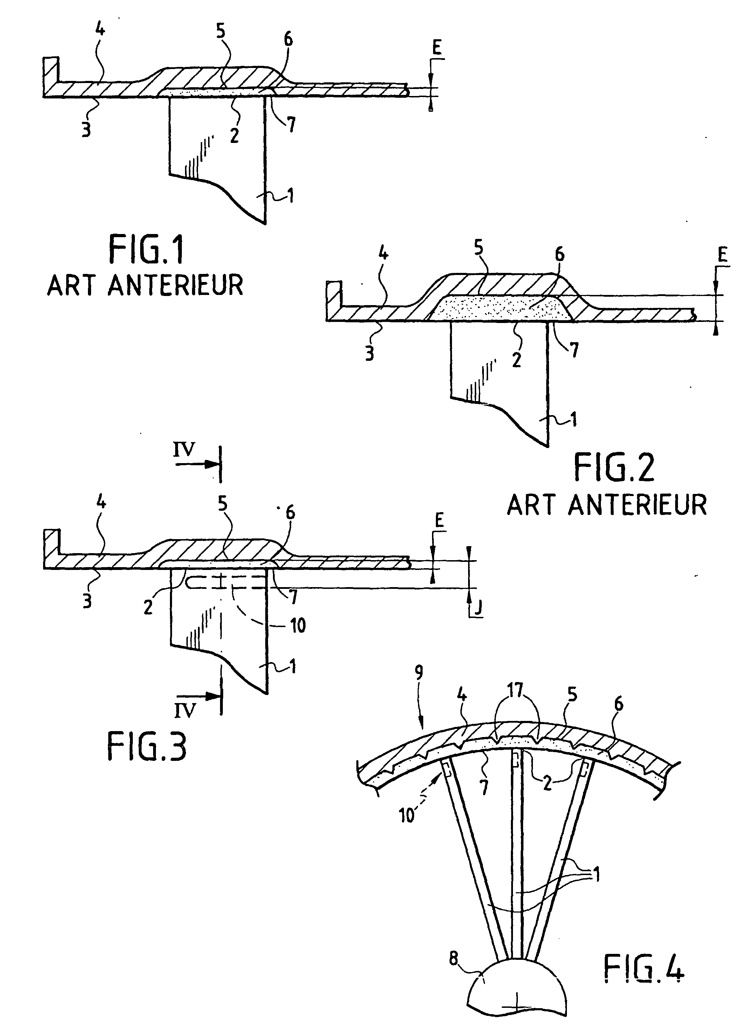

Les figures 1 et 2 montrent la partie radialement extérieure d'une aube 1 de soufflante d'un turboréacteur à double flux dont le sommet 2 arrive au voisinage de la paroi inférieure 3 d'un carter de rétention 4 entourant la soufflante.

La partie cylindrique annulaire 5 de la paroi intérieure 3, située en regard des sommets 2 des aubes 1 est tapissée par une couche 6 d'un matériau abradable dont la paroi intérieure 7 est rabotée par les sommets des aubes 1 lors des premières rotations de la soufflante, cette paroi 7 restant toutefois approximativement dans le prolongement de la paroi intérieure 3 du carter de rétention 4.

On a référencé par E le jeu entre les sommets 2 des aubes 1 et la paroi intérieure 5 du carter de rétention 4, ce jeu E étant occulté pendant le fonctionnement normal du turboréacteur par la couche 6 de matériau abradable.

La couche 6 de matériau abradable a deux rôles essentiels. Tout d'abord, lors du fonctionnement normal du turboréacteur, c'est-à-dire en l'absence de balourd accidentel de la soufflante, l'interstice entre les sommets 2 des aubes 1 et la paroi intérieure 7 de la couche 6 de matériau abradable, obtenu par rabotage, est réduit au maximum, ce qui permet d'éviter les fuites par cet interstice et ainsi de ne pas dégrader le rendement de la soufflante.

Le deuxième rôle de la couche 6 est de permettre un fonctionnement dégradé après l'apparition d'un balourd accidentel, par suite de la rupture d'une aube, qui entraîne un déplacement radial D de l'axe de la soufflante en rotation par rapport à son axe d'origine. Ce déplacement D entraîne un rabotage de la couche 6 de matériau abradable par les sommets 2 des aubes intactes.

L'épaisseur E de l'abradable est déterminée en fonction du déplacement D calculé pour un dommage prédéterminé d'une aube 1, ce déplacement D étant fonction de la raideur des supports du palier portant l'arbre d'entraînement du moyeu de la soufflante.

On voit que le jeu E montré sur la figure 1 est nettement inférieur au jeu E montré sur la figure 2. La figure 1 concerne en effet un turboréacteur classique sans découpleur, c'est-à-dire que le palier de l'arbre est toujours rigidement fixé à la structure du stator.

En revanche, la figure 2 concerne un turboréacteur comportant un découpleur, c'est-à-dire que le support de palier est relié à la structure par un dispositif de découplage comportant par exemple des fixations frangibles qui se rompent lors de l'apparition du balourd, diminuant ainsi la raideur du palier. L'axe géométrique de la soufflante se déplace alors d'une distance D du nouvel axe de rotation de la soufflante, cette distance D étant supérieure à la distance correspondante obtenue pour les mêmes causes par un turboréacteur sans découpleur. C'est pourquoi le jeu radial E entre les sommets 2 des aubes 1 et la paroi intérieure 5 du carter 4 est plus grand dans l'exemple montré à la figure 2 que dans l'exemple montré à la figure 1.

L'invention concerne un turboréacteur avec découpleur.

Ainsi que cela est montré sur les figures 3 à 7, les sommets 2 des aubes 1 de la soufflante d'un turboréacteur avec découpleur selon l'invention arrivent au voisinage de la paroi intérieure 3 du carter de rétention 4 entourant la soufflante. La partie annulaire cylindrique 5 de la paroi intérieure 3 située en regard des sommets 2 des aubes 1 est tapissée par une couche 6 d'un matériau abradable dont la paroi intérieure 7 est rabotée par les sommets 2 des aubes lors des premières rotations de la soufflante, cette paroi 7 restant approximativement dans le prolongement de la paroi intérieure 3 du carter de rétention 4.

Ainsi que cela se voit sur la figure 3, l'épaisseur E du revêtement abradable est sensiblement égal à celui montré sur la figure 1 et concernant un turboréacteur classique sans découpleur et insuffisant pour le fonctionnement du découpleur en cas de balourd accidentel.

Pour obtenir le jeu J > E nécessaire au fonctionnement dégradé du turboréacteur en cas de balourd accidentel, l'invention prévoit que les sommets 2 des aubes 1 sont susceptibles d'être désintégrés par la paroi interne 5 du carter 4 après rabotage total de la couche 6 de matériau abradable suite à l'apparition du balourd accidentel ayant entraîné le découplage du palier portant l'arbre d'entraînement du moyeu 8 de la soufflante 9.

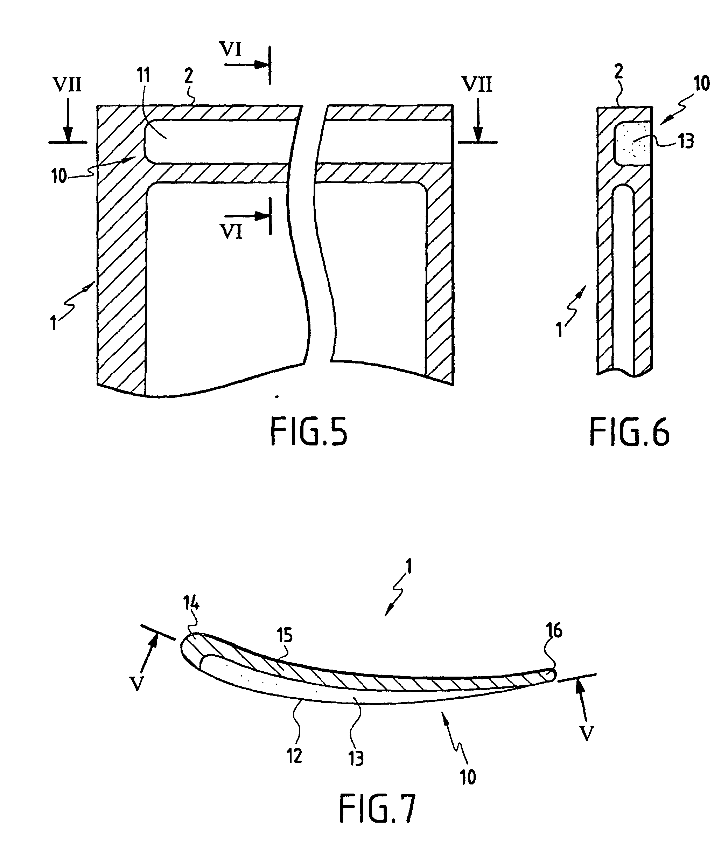

A cet effet, ainsi que cela est montré sur les figures 5 à 7, chaque aube 1 présente près de son sommet 2, une zone fragilisée 10 réalisée au moyen d'une rainure 11 ménagée, parallèlement à son sommet 2, sur la face extrados 12. Cette rainure 11 est remplie d'une résine 13 qui assure la continuité aérodynamique de l'extrados 12 au voisinage du sommet 2. La rainure 11 est ménagée dans le matériau de base de l'aube 1 sur une profondeur telle que la paroi restante en matériau de base de la zone fragilisée côtés bord d'attaque 14, intrados 15 et bord de fuite 16 a une résistance suffisante pour permettre le rabotage de la couche 6 de matériau abradable et soit suffisamment fragile pour casser à l'apparition d'un choc entre le sommet 2 de l'aube et la paroi intérieure 5 du carter de rétention 4.

Ainsi que cela est montré sur la figure 4, la paroi intérieure 5 du carter de rétention 4 présente une pluralité de nervures 17 sensiblement axiales, formant une râpe, qui facilitent la rupture des zones fragilisées 10 en cas de balourd, après abrasion du matériau abradable.

Sur la figure 3, on a représenté par E l'épaisseur de la couche 6 d'abradable et par J le jeu obtenu par la désintégration des sommets d'aubes. De préférence, le jeu E est inférieur au tiers du jeu J.

Du fait que, grâce à l'invention, l'épaisseur E de l'abradable est relativement faible, la géométrie du carter de rétention est simplifiée, ainsi que sa masse et sa dimension au droit de la soufflante.

La résine 13 est arrachée de l'aube après rupture de la zone fragilisée, ce qui permet de diminuer le poids de l'aube 1 en cas de désintégration de son sommet 2.

En fonctionnement, les sommets 2 désintégrés concernent les aubes 1 disposées sur le moyeu 8 du côté opposé à l'aube cassée qui a provoqué le balourd accidentel. Il en résulte qu'après désintégration de ces sommets, le centre de gravité de la soufflante se rapproche de son axe géométrique, ce qui diminue le balourd.

## Revendications

1. Turboréacteur pour aéronef comportant une soufflante (9) dont le moyeu (8) est entraîné par un arbre porté par au moins un palier relié à la structure du turboréacteur par un support de palier avec interposition d'un dispositif de découplage, ledit moyeu comportant à sa périphérie une pluralité d'aubes (1) se déplaçant à l'intérieur d'un carter de rétention (4) avec un jeu radial E entre les sommets (2) desdites aubes (1) et la paroi intérieure (5) dudit carter de rétention (4), ladite paroi intérieure (5) étant tapissée d'une couche (6) d'un matériau abradable susceptible d'être rabotée par les sommets des aubes en rotation,
**caractérisé par le fait que** les sommets (2) des aubes (1) sont susceptibles d'être désintégrés par la paroi interne (5) du carter de rétention (4) en cas de choc suite à l'apparition d'un balourd ayant entraîné le découplage du palier, afin d'obtenir un jeu J > E nécessaire au fonctionnement du découpleur.

2. Turboréacteur selon la revendication 1, **caractérisé par le fait que** les aubes (1) présentent près de leur sommet (2) une zone fragilisée (10) suffisamment résistante pour que les sommets (2) desdites aubes (1) puissent faire leur chemin dans le matériau abradable du carter de rétention (4), et suffisamment fragile pour casser à l'apparition d'un contact violent entre les sommets (2) desdites aubes (1) et la paroi interne (5) du carter de rétention (4).

3. Turboréacteur selon la revendication 2, **caractérisé par le fait que** la zone fragilisée (10) est réalisée par une rainure (11) ménagée parallèlement au sommet (2) sur une face de chaque aube dans le matériau de base constitutif de ladite aube, ladite rainure (11) étant remplie d'une résine (13) afin d'assurer la continuité aérodynamique de ladite face.

4. Turboréacteur selon la revendication 3, **caractérisé par le fait que** la rainure (11) est ménagée dans la face extrados (12) de l'aube (1).

5. Turboréacteur selon l'une des revendications 1 à 4, **caractérisé par le fait que** la paroi interne (5) du carter de rétention (4) présente des nervures (17) sensiblement axiales afin de faciliter la désintégration des sommets (2) des aubes (1) en cas de balourd après abrasion du matériau abradable par les sommets d'aubes.

6. Turboréacteur selon l'une quelconque des revendications 1 à 5, **caractérisé par le fait que** le jeu E est inférieur au tiers du jeu J.

## Patentansprüche

1. Turbotriebwerk für Luftfahrzeuge mit einem Gebläse (9), dessen Nabe (8) von einer Welle angetrieben wird, die von mindestens einem Lager gehalten wird, das mit dem festen Aufbau des Turbotriebwerks durch eine Lagerhalterung mit einer dazwischen angeordneten Entkoppelungsvorrichtung verbunden ist, wobei die genannte Nabe an ihrem Außenumfang eine Vielzahl von Schaufeln (1) aufweist, die sich im Inneren eines Traggehäuses (4) mit einem radialen Spiel E zwischen den Spitzen (2) dieser Schaufeln (1) und der Innenwand (5) des Traggehäuses (4) bewegen, wobei diese Innenwand (5) mit einer Schicht (6) eines abriebfähigen Materials beschichtet ist, welches durch die Spitzen der sich drehenden Schaufeln abgeschabt werden kann,
**dadurch gekennzeichnet,**
**dass** die Spitzen (2) der Schaufeln (1) geeignet sind, im Falle eines Stoßes als Folge einer Unwucht, die das Entkoppeln des Lagers nach sich gezogen hat, durch die Innenwand (5) des Traggehäuses (4) zu zerfallen, um ein Spiel J > E herzustellen, das für die Funktion der Entkoppelungsvorrichtung notwendig ist.

2. Turbotriebwerk nach Anspruch 1,
**dadurch gekennzeichnet,**
**dass** die Schaufeln (1) nahe bei ihrer Spitze (2) einen Sollbruch-Bereich (10) aufweisen, der ausreichend fest ist, dass die Spitzen (2) dieser Schaufeln (1) ihre Bahn in dem Abriebmaterial des Traggehäuses (4) verfolgen können, und ausreichend brüchig ist, dass er bei Eintreten einer gewaltsamen Berührung der Spitzen (2) dieser Schaufeln (1) mit der Innenwand (5) des Traggehäuses (4) bricht.

3. Turbotriebwerk nach Anspruch 2,
**dadurch gekennzeichnet,**
**dass** der Sollbruch-Bereich (10) mittels einer Rille (11) hergestellt wird, die parallel zur Spitze (2) an einer Seite jeder Schaufel in dem Basismaterial, aus dem diese Schaufel besteht, ausgeführt ist, wobei diese Rille (11) mit einem Harz (13) gefüllt wird, um die aerodynamische Kontinuität dieser Seite zu wahren.

4. Turbotriebwerk nach Anspruch 3,
**dadurch gekennzeichnet,**
**dass** die Rille (11) an der Saugseite (12) der Schaufel (1) ausgeführt ist.

5. Turbotriebwerk nach einem der Ansprüche 1 bis 4,
**dadurch gekennzeichnet,**
**dass** die Innenwand (5) des Traggehäuses (4) im Wesentlichen axial verlaufende Rippen (17) aufweist, um das Zerfallen der Spitzen (2) der Schaufeln (1) im Fall einer Unwucht nach dem Abrieb des Abriebmaterials durch die Schaufelspitzen zu erleichtern.

6. Turbotriebwerk nach einem der Ansprüche 1 bis 5,
**dadurch gekennzeichnet,**
**dass** das Spiel E kleiner ist als ein Drittel des Spiels J.

## Claims

1. Turbojet for an aircraft, comprising a fan (9) whose hub (8) is driven by a shaft supported by at least one bearing connected to the structure of the turbojet via a bearing support with interposition of a decoupling device, the said hub having, around its periphery, a plurality of blades (1) that move inside a retaining case (4) with a radial clearance E between the tips (2) of the said blades (1) and the inner wall (5) of the said retaining case (4), the said inner wall (5) being lined with a layer (6) of an abradable material that can be planed off by the tips of the rotating blades,
**characterized in that** the tips (2) of the blades (1) are liable to be disintegrated by the internal wall (5) of the retaining case (4) in the event of an impact as a result of the occurrence of an imbalance that has caused the bearing to decouple, so as to obtain a clearance J > E needed for the operation of the decoupler.

2. Turbojet according to Claim 1, **characterized in that** the blades (1) have, close to their tip (2), a weakened region (10) that is strong enough for the tips (2) of the said blades (1) to be able to continue their path in the abradable material of the retaining case (4) but weak enough to break at the occurrence of a violent contact between the tips (2) of the said blades (1) and the internal wall (5) of the retaining case (4).

3. Turbojet according to Claim 2, **characterized in that** the weakened region (10) is produced by a slot (11) made parallel to the tip (2) on one face of each blade in the constituent base material of the said blade, the said slot (11) being filled with a resin (13) so as to ensure aerodynamic continuity of the said face.

4. Turbojet according to Claim 3, **characterized in that** the slot (11) is made in the suction side (12) of the blade (1).

5. Turbojet according to one of Claims 1 to 4, **characterized in that** the internal wall (5) of the retaining case (4) has substantially axial ribs (17) so as to make it easier for the tips (2) of the blades (1) to disintegrate in the event of imbalance after the material abradable by the blade tips has been abraded.

6. Turbojet according to any one of Claims 1 to 5, **characterized in that** the clearance E is less than one third of the clearance J.
